# EUROPÄISCHE PATENTSCHRIFT

(11) **EP 0 964 015 B1**
(45) Veröffentlichungstag und Bekanntmachung des Hinweises auf die Patenterteilung: **08.10.2003**
(21) Anmeldenummer: 99110397.9
(22) Anmeldetag: 28.05.1999
(51) Int. Cl.: C08G 63/668

(54) **Schmutzablösevermögende Oligoester**
Soil release oligoester
Oligoester detachant

(30) Priorität: 12.06.1998 DE 19826356
(43) Veröffentlichungstag der Anmeldung: 15.12.1999
(73) Patentinhaber: Clariant GmbH, 65929 Frankfurt am Main (DE)
(72) Erfinder: Lang, Frank-Peter Dr., 65795 Hattersheim (DE); Becherer, Johannes Dr., 63477 Maintal (DE); Wessling, Michael Dr., Charlotte, North Carolina 28210 (US); Lerch, Alexander Dr., 63571 Gelnhausen (DE)

(56) Entgegenhaltungen:
- EP-A- 0 442 101
- EP-A- 0 752 468
- DE-A- 19 522 431
- US-A- 5 728 671

## Beschreibung

Die vorliegende Erfindung betrifft schmutzablösende Oligoester, ihre Herstellung und ihre Verwendung in Wasch- und Reinigungsmitteln.

Schmutzlösepolymere sind seit vielen Jahren Gegenstand intensiver Entwicklungsarbeiten. Ursprünglich als Textilhilfsmittel für die Ausrüstung von Synthesefasern, insbesondere Polyesterfasern, entwickelt, finden sie heute als sogenannte Waschhilfsstoffe auch Verwendung in Wasch- und Reinigungsmitteln für die Haushaltswäsche. Gängige Bezeichnungen für derartige schmutzablösevermögende Verbindungen sind "Soil Release Polymere" oder "Soil Repellents", weil sie den behandelten Oberflächen schmutzabweisende Eigenschaften verleihen.

Bei der überwiegenden Anzahl der Schmutzlösepolymere handelt es sich um Polyester auf der Basis von Terephthalsäure, Polyalkylenglykolen und monomeren Glykolen.

Diese werden aufgrund ihrer strukturellen Verwandtschaft von Polyestergewebe oder polyesterhaltigem Mischgewebe gut aus einer wäßrigen Lösung oder einer Waschflotte adsorbiert und bilden auf dem hydrophoben Gewebe einen hydrophilen Film aus. Dieser bewirkt, daß die Affinität des Gewebes gegenüber hydrophobem Öl- und Fettschmutz reduziert wird. Gleichzeitig wird die Benetzbarkeit des Polyestergewebes mit der wäßrigen Waschflotte verbessert. Beides führt zu einer leichteren Ablösung von öligen oder fettigen Anschmutzungen, die normalerweise von Polyestergewebe sehr schwer zu entfernen sind. Darüber hinaus wird der Feuchtigkeitstransport (Wasserabsorption und Saugfähigkeit) in den behandelten hydrophoben Geweben wie Polyester oder Polyester/Baumwollmischgewebe deutlich verbessert, was die Trageeigenschaften positiv beeinflußt. Zusätzlich verbessern die Schmutzlösepolymere auch die Antistatik- und die Gleiteigenschaften. Dies erleichtert die Handhabung der Gewebe bei der Textilverarbeitung.

Eine Vielzahl von Patenten und Patentanmeldungen offenbart die Herstellung von Schmutzlösepolymeren, ihre Wirksamkeitsverbesserung und Verfahren zu ihrer Anwendung. Im folgenden werden die Abkürzungen ET=Ethylenterephthalat, PET=Polyethylenterephthalat und POET=Polyoxyethylenterephthalat verwendet. US-3 557 039 offenbart die Herstellung schmutzablösender Polyester ausgehend von Dimethylterephthalat und Ethylenglykol in Gegenwart eines Katalysators aus Calciumacetat und Antimontrioxid. US-3 959 280 offenbart eine ähnliche Synthese wie US-3 557 039, wobei zusätzlich Polyethylenoxid als Reaktant verwendet wird. Die so erhaltenen Polyester sind charakterisiert durch ein molares Verhältnis von ET : POET = 25 : 75 bis 35 : 65, durch ein Molgewicht der Polyethylenoxideinheiten im POET von 300 bis 700, durch ein Molgewicht von 25.000 bis ca. 55.000 und durch einen Schmelzpunkt von kleiner 100°C.

Statistische PET-POET-Copolymere mit einem durchschnittlichen Molgewicht von 5.000 bis 200.000 werden in US-4 125 370 offenbart. Das PET : POET Verhältnis variiert von 20 : 80 bis 90 : 10 . Die Polyethylenoxideinheiten haben ein Molgewicht von 300 bis 10.000. Die Herstellung dieser Polymere wird in US-3 959 280 beziehungsweise in US-3 479 212 beschrieben.

Aus EP-A-0 241 985 sind Polyester bekannt, die neben Oxethylen-Gruppen und Terephthalsäureeinheiten 1,2-Propylen-, 1,2-Butylen-, und/oder 3-Methoxy-1,2-propylengruppen enthalten, und mit C₁-bis C₄-Alkylgruppen endgruppenverschlossen sind.

EP-B-0 185 427 offenbart Oligoester auf der Basis von Dimethylterephthalat, Ethylen- und/oder Propylenglykol und Methyl- oder Ethylpolyethylenglykol, welche pro Molekül durchschnittlich 4 bis 11 Terephthalsäureeinheiten enthalten.

Gemäß US-4 956 447 kann die Performance von Schmutzlösepolymeren durch Kationisierung mittels Einbau quartärer Stickstoffverbindungen gesteigert werden.

US-4 427 557 und EP-A-0 066 944 offenbaren, durch Verwendung des Natriumsalzes der Sulfoisophthalsäure, anionisch modifizierte Polyester. Die eingesetzten Polyethylenglykole besitzen Molgewichte von 200 bis 1000 g/mol. Nach Polymerisation mit Ethylenglykol und Terephthalsäure resultieren Oligoester mit Molgewichten von 2.000 bis 10.000 g/mol.

EP-A-0 274 907 offenbart Sulfoethylendgruppen-verschlossene terephthalathaltige Soll Release Polyester.

US-3 712 873 offenbart Formulierungen zur Textilausrüstung mit einem Gehalt von 1 - 5 % eines Polyesters mit einem Molgewicht von 3.000 bis 5.000 auf Basis Terephthalsäure, Polyethylenglykol und einem C₂- bis C₄-Alkylenglykol. Die Formulierungen können mittels Aufsprühen oder im Foulardierverfahren appliziert werden.

US-3 512 920 offenbart die Behandlung von Baumwoll/Polyestergeweben mittels niedrigmolekularer Polyester auf Basis von Alkylenglykolen, Polyalkylenglykolen und Terephthalsäure zusammen mit Stärke- oder Cellulosederivaten und anschließender Hitzefixierung.
In DE-OS-22 53 063 sind saure Textilausrüstungsmittel offenbart, die ein Copolymer aus einer Dicarbonsäure und einem Alkylen- oder Cycloalkylenpolyglykol sowie gegebenenfalls einem Alkylenglykol und einem Cycloalkylenglykol enthalten.

WO-92/17523 beschreibt die Verwendung von mit endständigen Methylgruppen verschlossenen Soil Release Polyestern in Waschmitteln und speziell in Wäscheweichspülerformulierungen.

Pl 93 133 und PL 121 510 beschreiben Soil Release Appreturen für die Ausrüstung von Textilien aus Baumwolle oder Baumwoll-Polyester-Mischgeweben, die Soil Release Polymere enthalten, welche durch die Kondensation von Terephthalsäuredimethylester, Ethylenglykol, Glyzerin und Polyethylenglykol der mittleren Molmasse 1540 erhalten werden. PL 125 292 offenbart ein Verfahren zur polyfunktionellen Veredelung von Textilien, in welchem das vorgenannte Soil Release Polymer enthalten ist.

Waschmittel, die nichtionische Tenside und ein Mischpolymer aus Polyoxyethylenglykol und Polyethylenterephthalat enthalten, werden in DE-OS-22 00 911 offenbart.

In EP-A-0 319 094 wird der Einsatz von ET/ POET-Copolymeren zur Behandlung von Wäsche in Wäschetrocknern beschrieben. Neben der Wirkung als Schmutzlösepolymer wird besonders die antistatische Wirkung auf die behandelte Wäsche herausgestellt.

Eine Form der Konfektionierung von Schmutzlösepolymeren wird in DE-OS-33 24 258 offenbart. Dazu wird ein PET/ POET-Polyester mit PET: POET = 2 bis 6 : 1 in einem flüssigen nichtionischen Tensid gelöst bzw. dispergiert und die Mischung auf einen Builder versprüht.

Vor dem Hintergrund des Standes der Technik bestand die Aufgabe in der Entwicklung von Oligoestern mit verbesserten Schmutzablöse-Eigenschaften.

Es wurde nun gefunden, daß Oligoester auf der Basis von Dicarbonsäuren, mehrwertigen Alkoholen, Ethylen- und/oder 1,2-Propylenglykol und Polyalkylenglykolen, welche durch Alkylpolyethylenglykole und/oder Arylpolyethylenglykole endverschlossen sind, gegenüber dem Stand der Technik deutlich verbesserte Soil-Release-Eigenschaften aufweisen.

Gegenstand der Erfindung sind Oligoester, die erhalten werden durch Polykondensation von
a) 40 bis 52, vorzugsweise 45 bis 50 mol% einer oder mehrerer Dicarbonsäuren oder deren Ester,
b) 10 bis 40, vorzugsweise 20 bis 35 mol% Ethylenglykol und/oder Propylenglykol,
c) 3 bis 20, vorzugsweise 10 bis 15 mol% Polyethylenglykol,
d) 0,5 bis 10, vorzugsweise 1 bis 7,5 mol% eines wasserlöslichen Anlagerungsproduktes von 5 bis 80 mol eines Alkylenoxids an 1 mol C₁-C₂₄-Alkohole, C₆-C₁₈-Alkylphenole oder C₈-C₂₄-Alkylamine und
e) 0,4 bis 10, vorzugsweise 0,5 bis 8 mol% eines oder mehrerer Polyole mit 3 bis 6 Hydroxylgruppen.

Als Komponente a) zur Herstellung der Polyester eignen sich beispielsweise Terephthalsäure, Phthalsäure, Isophthalsäure sowie die Mono- und Dialkylester mit C₁- bis C₆-Alkoholen, wie Dimethylterephthalat, Diethylterephthalat und Di-n-propylterephthalat. Weitere Beispiele für Verbindungen, die als Komponente a) zur Herstellung der Polyester eingesetzt werden können, sind Oxalsäure, Bernsteinsäure, Glutarsäure, Adipinsäure, Fumarsäure, Maleinsäure, Itakonsäure, sowie die Mono- und Dialkylester der Carbonsäuren mit C₁-C₆-Alkoholen, z.B. Oxalsäurediethylester, Bernsteinsäurediethylester, Glutarsäurediethylester, Adipinsäuremethylester, Adipinsäurediethylester, Adipinsäure-di-n-butylester, Fumarsäureethylester und Maleinsäuredimethylester. Sofern die in Betracht kommenden Dicarbonsäuren Anhydride bilden können, sind auch die Anhydride der mindestens 2 Carboxylgruppen aufweisenden Carbonsäuren als Verbindung der Komponente a) zur Herstellung der Polyester geeignet, z.B. Maleinsäureanhydrid, Phthalsäureanhydrid oder Bernsteinsäureanhydrid. Besonders bevorzugt werden als Verbindung der Komponente a) Terephthalsäure, Phthalsäure, Isophthalsäure sowie deren Dimethyl-, Diethyl-, Dipropyl- und Dibutylester eingesetzt. Es ist selbstverständlich möglich, Mischungen verschiedener Carbonsäuren oder verschiedener Ester einzusetzen. Ebenso kann man auch beispielsweise Mischungen aus Carbonsäuren und Ester oder Mischungen aus Carbonsäuren und Anhydriden bei der Kondensation verwenden.

Als Komponente c) verwendet man Polyethylenglykole mit Molmassen von 500 bis 5000, vorzugsweise von 1000 bis 3000.

Als Komponente d) zur Herstellung der Polyester kommen wasserlösliche Anlagerungsprodukte von 5 bis 80 mol mindestens eines Alkylenoxids an 1 mol C₁-C₁₈-Alkohole, C₆-C₁₈-Alkylphenole oder C₈-C₂₄-Alkylamine in Betracht. Bevorzugt sind Mono-methylether von Polyethylenglykolen. Als Alkylenoxide zur Herstellung der Verbindungen der Komponente d) verwendet man vorzugsweise Ethylenoxid sowie Mischungen aus Ethylenoxid und Propylenoxid. Außerdem eignen sich Mischungen aus Ethylenoxid zusammen mit Propylenoxid und/oder Butylenoxid, Mischungen aus Ethylenoxid, Propylenoxid und Isobutylenoxid oder Mischungen aus Ethylenoxid und mindestens einem Butylenoxid. Diese wasserlöslichen Anlagerungsprodukte der Alkylenoxide sind Tenside. Fall zu ihrer Herstellung Mischungen von Alkylenoxiden verwendet wurden, so können sie die Alkylenoxide in Blöcken oder auch in statistischer Verteilung enthalten.

Geeignete Alkohole, die alkoxyliert werden, sind beispielsweise Octylalkohol, Decylalkohol, Laurylalkohol, Myristylalkohol oder Stearylalkohol, insbesondere aber Methanol, sowie die nach dem Ziegler-Verfahren erhältlichen Alkohole mit 8 bis 24 C-Atomen oder die entsprechenden Oxoalkohole. Von den Alkylphenolen haben insbesondere Octylphenol, Nonylphenol und Dodecylphenol zur Herstellung der entsprechenden Tenside Bedeutung. Von den in Betracht kommenden Alkylaminen verwendet man insbesondere die C₁₂-C₁₈-Monoalkylamine zur Herstellung der wasserlöslichen Tenside.

Als Polyole (Komponente e) kommen beispielsweise in Frage Pentaerythrit, Trimethylolethan, Trimethylolpropan, 1,2,3-Hexantriol, Sorbit, Mannit und Glycerin.

Die Synthese der erfindungsgemäßen Oligoester erfolgt nach an sich bekannten Verfahren, indem die Komponenten a, b, c, d und e unter Zusatz eines Katalysators zunächst bei Normaldruck auf Temperaturen von 160 bis ca. 220°C erhitzt werden. Dann wird die Reaktion im Vakuum bei Temperaturen von 160 bis ca. 240°C unter Abdestillieren überschüssiger Glykole fortgesetzt. Für die Reaktion eignen sich die bekannten Umesterungs- und Kondensationskatalysatoren des Standes der Technik, wie beispielsweise Titantetraisopropylat, Dibutylzinnoxid oder Antimontrioxid/Calciumacetat. Bezüglich weiterer Einzelheiten zur Durchführung des Verfahrens wird auf EP 442 101 verwiesen.

Ein weiterer Gegenstand der Erfindung ist die Verwendung dieser Ester in Waschund Reinigungsmitteln, insbesondere zur Erhöhung ihrer Reinigungsleistung gegenüber öligen und fettigen Anschmutzungen, sowie diese Wasch- und Reinigungsmittel.

Die Wasch- und Reinigungsmittelformulierungen, in denen die erfindungsgemäßen Oligoester eingesetzt werden können, sind pulver-, granulat-, pasten-, gelförmig, flüssig oder es sind feste Waschstücke. Sie enthalten mindestens 0,1 %, bevorzugt zwischen 0,1 und 10 % und besonders bevorzugt 0,2 bis 3 % der erfindungsgemäßen Oligoester. Die Formulierungen sind je nach ihrer vorgesehenen Anwendung in ihrer Zusammensetzung der Art der zu waschenden Textilien oder der zu reinigenden Oberflächen anzupassen. Sie enthalten konventionelle Wasch- und Reinigungsmittelinhaltsstoffe, wie sie dem Stand der Technik entsprechen. Repräsentative Beispiele für solche Wasch- und Reinigungsmittelinhaltsstoffe werden im folgenden beschrieben.

Die Gesamtkonzentration von Tensiden in der fertigen Wasch- und Reinigungsmittelformulierung kann von 1% bis 99% und bevorzugt von 5% bis 80% (alles Gew.-%) betragen. Die verwendeten Tenside können anionisch, nichtionisch, amphoter oder kationisch sein. Es können auch Mischungen der genannten Tenside verwendet werden. Bevorzugte Wasch- und Reinigungsmittelformulierungen enthalten anionische und/oder nichtionische Tenside und deren Mischungen mit weiteren Tensiden.

Als anionische Tenside kommen Sulfate, Sulfonate, Carboxylate, Phosphate und Mischungen daraus in Betracht. Geeignete Kationen sind hierbei Alkalimetalle, wie z. B. Natrium oder Kalium oder Erdalkalimetalle, wie z. B. Calcium oder Magnesium sowie Ammonium, substituierte Ammoniumverbindungen, einschließlich Mono-, Di- oder Triethanolammoniumkationen, und Mischungen daraus. Folgende Typen von anionischen Tensiden sind von besonderem Interesse:
Alkylestersulfonate, Alkylsulfate, Alkylethersulfate, Alkylbenzolsulfonate, sekundäre Alkansulfonate und Seifen, wie im folgenden beschrieben.

Alkylestersulfonate sind unter anderem lineare Ester von C₈-C₂₀-Carboxylsäuren (d.h. Fettsäuren), welche mittels gasförmigem SO₃ sulfoniert werden, wie in "The Journal of the American Oil Chemists Society" 52 (1975), pp. 323-329 beschrieben wird. Geeignete Ausgangsmaterialien sind natürliche Fette wie z.B. Talg, Kokosöl und Palmöl, können aber auch synthetischer Natur sein. Bevorzugte Alkylestersulfonate, speziell für Waschmittelanwendungen, sind Verbindungen der Formel 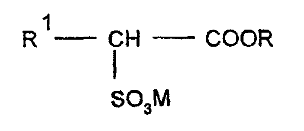 worin R¹ einen C₈-C₂₀-Kohlenwasserstoffrest, bevorzugt Alkyl, und R einen C₁-C₆ Kohlenwasserstoffrest, bevorzugt Alkyl, darstellt. M steht für ein Kation, das ein wasserlösliches Salz mit dem Alkylestersulfonat bildet. Geeignete Kationen sind Natrium, Kalium, Lithium oder Ammoniumkationen, wie Monoethanolamin, Diethanolamin und Triethanolamin. Bevorzugt bedeuten R¹ C₁₀-C₁₆-Alkyl und R Methyl, Ethyl oder Isopropyl. Besonders bevorzugt sind Methylestersulfonate, in denen R¹ C₁₀-C₁₆-Alkyl bedeutet.

Alkylsulfate sind hier wasserlösliche Salze oder Säuren der Formel ROSO₃M, worin R ein C₁₀-C₂₄-Kohlenwasserstoffrest, bevorzugt ein Alkyl- oder Hydroxyalkylrest mit C₁₀-C₂₀-Alkylkomponente, besonders bevorzugt ein C₁₂-C₁₈ Alkyl- oder Hydroxyalkylrest ist. M ist Wasserstoff oder ein Kation, z.B. ein Alkalimetallkation (z.B. Natrium, Kalium, Lithium) oder Ammonium oder substituiertes Ammonium, z. B. Methyl-, Dimethyl- und Trimethylammoniumkationen und quaternäre Ammoniumkationen, wie Tetramethylammonium- und Dimethylpiperidiniumkationen und quartäre Ammoniumkationen, abgeleitet von Alkylaminen wie Ethylamin, Diethylamin, Triethylamin und Mischungen davon. Alkylketten mit C₁₂-C₁₆ sind für niedrige Waschtemperaturen (z. B. unter ca. 50°C) und Alkylketten mit C₁₆-C₁₈ für höhere Waschtemperaturen (z. B. oberhalb ca. 50°C) bevorzugt

Alkylethersulfate sind wasserlösliche Salze oder Säuren der Formel RO(A)ₘ SO₃M, worin R einen unsubstituierten C₁₀-C₂₄-Alkyl- oder Hydroxyalkylrest, bevorzugt einen C₁₂-C₂₀ Alkyl- oder Hydroxyalkylrest, besonders bevorzugt C₁₂-C₁₈-Alkyl- oder Hydroxyalkylrest darstellt. A ist eine Ethoxy- oder Propoxyeinheit, m ist eine Zahl größer als 0, vorzugsweise zwischen ca. 0,5 und ca. 6, besonders bevorzugt zwischen ca. 0,5 und ca. 3 und M ist ein Wasserstoffatom oder ein Kation wie z. B. Natrium, Kalium, Lithium, Calcium, Magnesium, Ammonium oder ein substituiertes Ammoniumkation. Spezifische Beispiele von substituierten Ammoniumkationen sind Methyl-, Dimethyl-, Trimethylammonium- und quartemäre Ammoniumkationen wie Tetramethylammonium und Dimethylpiperidiniumkationen sowie solche, die von Alkylaminen, wie Ethylamin, Diethylamin, Triethylamin oder Mischungen davon abgeleitet sind. Als Beispiele seien C₁₂- bis C₁₈-Fettalkoholethersulfate genannt wobei der Gehalt an EO 1, 2, 2.5, 3 oder 4 mol pro mol des Fettalkoholethersulfats beträgt, und in denen M Natrium oder Kalium ist.

In sekundären Alkansulfonaten kann die Alkylgruppe entweder gesättigt oder ungesättigt, verzweigt oder linear und gegebenenfalls mit einer Hydroxylgruppe substituiert sein. Die Sulfogruppe kann an einer beliebigen Position der C-Kette sein, wobei die primären Methylgruppen am Kettenanfang und Kettenende keine Sulfonatgruppen besitzen. Die bevorzugten sekundären Alkansulfonate enthalten lineare Alkylketten mit ca. 9 bis 25 Kohlenstoffatomen, bevorzugt ca. 10 bis ca. 20 Kohlenstoffatome und besonders bevorzugt ca. 13 bis 17 Kohlenstoffatome. Das Kation ist beispielsweise Natrium, Kalium, Ammonium, Mono-, Di- oder Triethanolammonium, Calcium oder Magnesium, und Mischungen davon. Natrium als Kation ist bevorzugt.

Weitere geeignete anionische Tenside sind Alkenyl- oder Alkylbenzolsulfonate. Die Alkenyl- oder Alkylgruppe kann verzweigt oder linear und gegebenenfalls mit einer Hydroxylgruppe substituiert sein. Die bevorzugten Alkylbenzolsulfonate enthalten lineare Alkylketten mit ca. 9 bis 25 Kohlenstoffatomen, bevorzugt von ca. 10 bis ca. 13 Kohlenstoffatome, das Kation ist Natrium, Kalium, Ammonium, Mono-, Di- oder Triethanolammonium, Calcium oder Magnesium und Mischungen davon. Für milde Tensidsysteme ist Magnesium als Kation bevorzugt, für Standardwaschanwendungen dagegen Natrium. Gleiches gilt für Alkenylbenzolsulfonate.

Der Begriff anionische Tenside schließt auch Olefinsulfonate mit ein, die durch Sulfonierung von C₁₂-C₂₄-, vorzugsweise C₁₄-C₁₆-α-Olefinen mit Schwefeltrioxid und anschließende Neutralisation erhalten werden. Bedingt durch das Herstellverfahren, können diese Olefinsulfonate kleinere Mengen an Hydroxyalkansulfonaten und Alkandisulfonaten enthalten. Spezielle Mischungen von α-Olefinsulfonaten sind in US-3,332,880 beschrieben.

Weitere bevorzugte anionische Tenside sind Carboxylate, z. B. Fettsäureseifen und vergleichbare Tenside. Die Seifen können gesättigt oder ungesättigt sein und können verschiedene Substituenten, wie Hydroxylgruppen oder α-Sulfonatgruppen enthalten. Bevorzugt sind lineare gesättigte oder ungesättigte Kohlenwasserstoffreste als hydrophober Anteil mit ca. 6 bis ca. 30, bevorzugt ca. 10 bis ca. 18 Kohlenstoffatomen.

Als anionische Tenside kommen weiterhin Salze von Acylaminocarbonsäuren in Frage, die durch Umsetzung von Fettsäurechloriden mit Natriumsarkosinat im alkalischen Medium entstehenden Acylsarcosinate; Fettsäure-Eiweiß-Kondensationsprodukte, die durch Umsetzung von Fettsäurechloriden mit Oligopeptiden erhalten werden; Salze von Alkylsulfamidocarbonsäuren; Salze von Alkyl- und Alkylarylethercarbonsäuren; C₈-C₂₄-Olefinsulfonate, sulfonierte Polycarboxylsäuren, hergestellt durch Sulfonierung der Pyrolyseprodukte von Erdalkalimetallcitraten, wie z.B. beschrieben in GB-1,082,179; Alkylglycerinsulfate, Oleylglycerinsulfate, Alkylphenolethersulfate, primäre Paraffinsulfonate, Alkylphosphate, Alkyletherphosphate, Isethionate, wie Acylisethionate, N-Acyltauride, Alkylsuccinate, Sulfosuccinate, Monoester der Sulfosuccinate (besonders gesättigte und ungesättigte C₁₂-C₁₈-Monoester) und Diester der Sulfosuccinate (besonders gesättigte und ungesättigte C₁₂-C₁₈-Diester), Acylsarcosinate, Sulfate von Alkylpolysacchariden wie Sulfate von Alkylpolyglycosiden, verzweigte primäre Alkylsulfate und Alkylpolyethoxycarboxylate wie die der Formel RO(CH₂CH₂)ₖCH₂COO⁻M⁺, worin R C₈ bis C₂₂-Alkyl, k eine Zahl von 0 bis 10 und M ein Kation ist, Harzsäuren oder hydrierte Harzsäuren, wie Rosin oder hydriertes Rosin oder Tallölharze und Tallölharzsäuren. Weitere Beispiele sind in "Surface Active Agents and Detergents" (Vol. I und II, Schwartz, Perry und Berch) beschrieben.

Als nicht-ionische Tenside kommen beispielsweise folgende Verbindungen in Frage: Polyethylen-, Polypropylen- und Polybutylenoxidkondensate von Alkylphenolen.

Diese Verbindungen umfassen die Kondensationsprodukte von Alkylphenolen mit einer C₆- bis C₂₀-Alkylgruppe, die entweder linear oder verzweigt sein kann, mit Alkenoxiden. Bevorzugt sind Verbindungen mit ca. 5 bis 25 mol Alkenoxid pro mol Alkylphenol. Kommerziell erhältliche Tenside diesen Typs sind z.B. Igepal® CO-630, Triton® X-45, X-114, X-100 und X102, und die ®Arkopal-N-Marken der Clariant GmbH. Diese Tenside werden als Alkylphenolalkoxilate, z.B. Alkylphenolethoxilate, bezeichnet.

Kondensationsprodukte von aliphatischen Alkoholen mit ca. 1 bis ca. 25 mol Ethylenoxid.

Die Alkylkette der aliphatischen Alkohole kann linear oder verzweigt, primär oder sekundär sein, und enthält im allgemeinen ca. 8 bis ca. 22 Kohlenstoffatome. Besonders bevorzugt sind die Kondensationsprodukte von C₁₀- bis C₂₀-Alkoholen mit ca. 2 bis ca. 18 mol Ethylenoxid pro mol Alkohol. Die Alkylkette kann gesättigt oder auch ungesättigt sein. Die Alkoholethoxilate können eine enge ("Narrow Range Ethoxilates") oder eine breite Homologenverteilung des Ethylenoxides ("Broad Range Ethoxylates") aufweisen. Beispiele von kommerziell erhältlichen nichtionischen Tensiden dieses Types sind Tergitol® 15-S-9 (Kondensationsprodukt eines linearen sekundären C₁₁-C₁₅-Alkohols mit 9 mol Ethylenoxid), Tergitol® 24-L-NMW (Kondensationsprodukt eines linearen primären C₁₂-C₁₄-Alkohols mit 6 mol Ethylenoxid bei enger Molgewichtsverteilung). Ebenfalls unter diese Produktklasse fallen die Genapol®-Marken der Clariant GmbH.

Kondensationsprodukte von Ethylenoxid mit einer hydrophoben Basis, gebildet durch Kondensation von Propylenoxid mit Propylenglykol.

Der hydrophobe Teil dieser Verbindungen weist bevorzugt ein Molekulargewicht zwischen ca. 1500 und ca. 1800 auf. Die Anlagerung von Ethylenoxid an diesen hydrophoben Teil führt zu einer Verbesserung der Wasserlöslichkeit. Das Produkt ist flüssig bis zu einem Polyoxyethylengehalt von ca. 50 % des Gesamtgewichtes des Kondensationsproduktes, was einer Kondensation mit bis zu ca. 40 mol Ethylenoxid entspricht. Kommerziell erhältliche Beispiele dieser Produktklasse sind die Pluronic®-Marken der BASF und die ®Genapol PF-Marken der Clariant GmbH.

Kondensationsprodukte von Ethylenoxid mit einem Reaktionsprodukt von Propylenoxid und Ethylendiamin.

Die hydrophobe Einheit dieser Verbindungen besteht aus dem Reaktionsprodukt von Ethylendiamin mit überschüssigem Propylenoxid und weist im allgemeinen ein Molekulargewicht von ca. 2500 bis 3000 auf. An diese hydrophobe Einheit wird Ethylenoxid bis zu einem Gehalt von ca. 40 bis ca. 80 Gew.-% Polyoxyethylen und einem Molekulargewicht von ca. 5000 bis 11000 addiert Kommerziell erhältliche Beispiele dieser Verbindungsklasse sind die ®Tetronic-Marken der BASF und die ®Genapol PN-Marken der Clariant GmbH.

### Semipolare nichtionische Tenside

Diese Kategorie von nichtionischen Verbindungen umfaßt wasserlösliche Aminoxide, wasserlösliche Phosphinoxide und wasserlösliche Sulfoxide, jeweils mit einem Alkylrest von ca. 10 bis ca. 18 Kohlenstoffatomen. Semipolare nichtionische Tenside sind auch Aminoxide der Formel 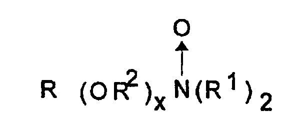 R ist hierbei eine Alkyl-, Hydroxyalkyl- oder Alkylphenolgruppe mit einer Kettenlänge von ca. 8 bis ca. 22 Kohlenstoffatomen, R² ist eine Alkylen- oder Hydroxyalkylengruppe mit ca. 2 bis 3 Kohlenstoffatomen oder Mischungen hiervon, jeder Rest R¹ ist eine Alkyl- oder Hydroxyalkylgruppe mit ca. 1 bis ca. 3 Kohlenstoffatomen oder eine Polyethylenoxidgruppe mit ca. 1 bis ca. 3 Ethylenoxideinheiten und x bedeutet eine Zahl von 0 bis etwa 10. Die R¹-Gruppen können miteinander über ein Sauerstoff- oder Stickstoffatom verbunden sein und somit einen Ring bilden. Aminoxide dieser Art sind besonders C₁₀-C₁₈-Alkyldimethylaminoxide und C₈-C₁₂-Alkoxiethyl-Dihydroxyethylaminoxide.

### Fettsäureamide

### Fettsäureamide besitzen die Formel

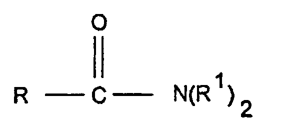

worin R eine Alkylgruppe mit ca. 7 bis ca. 21, bevorzugt ca. 9 bis ca. 17 Kohlenstoffatomen ist und jeder Rest R¹ Wasserstoff, C₁-C₄-Alkyl, C₁-C₄-Hydroxyalkyl oder (C₂H₄O)ₓH bedeutet, wobei x von ca. 1 bis ca. 3 variiert. Bevorzugt sind C₈-C₂₀-Amide, -monoethanolamide, -diethanolamide und -isopropanolamide.

Weitere geeignete nichtionische Tenside sind Alkyl- und Alkenyloligoglycoside sowie Fettsäurepolyglykolester oder Fettaminpolyglykolester mit jeweils 8 bis 20, vorzugsweise 12 bis 18 C-Atomen im Fettalkylrest, alkoxylierte Triglycamide, Mischether oder Mischformyle, Alkyloligoglycoside, Alkenyloligoglycoside, Fettsäure-N-alkylglucamide, Phosphinoxide, Dialkylsulfoxide und Proteinhydrolysate.

Typische Beispiele für amphotere bzw. zwitterionische Tenside sind Alkylbetaine, Alkylamidbetaine, Aminopropionate, Aminoglycinate, oder amphotere Imidazolinium-Verbindungen der Formel 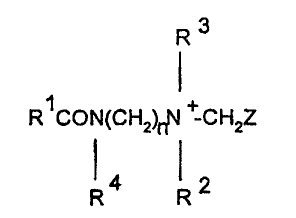 worin R¹ C₈-C₂₂-Alkyl- oder -Alkenyl, R² Wasserstoff oder CH₂CO₂M, R³ CH₂CH₂OH oder CH₂CH₂OCH₂CH₂CO₂M, R⁴ Wasserstoff, CH₂CH₂OH oder CH₂CH₂COOM, Z CO₂M oder CH₂CO₂M, n 2 oder 3, bevorzugt 2, M Wasserstoff oder ein Kation wie Alkalimetall, Erdalkalimetall, Ammonium oder Alkanolammonium bedeutet.

Bevorzugte amphotere Tenside dieser Formel sind Monocarboxylate und Dicarboxylate. Beispiele hierfür sind Cocoamphocarboxypropionat, Cocoamidocarboxypropionsäure, Cocoamphocarboxyglycinat (oder auch als Cocoamphodiacetat bezeichnet) und Cocoamphoacetat.

Weitere bevorzugte amphotere Tenside sind Alkyldimethylbetaine und Alkyldipolyethoxybetaine mit einem Alkylrest mit ca. 8 bis ca. 22 Kohlenstoffatomen, der linear oder verzweigt sein kann, bevorzugt mit 8 bis 18 Kohlenstoffatomen und besonders bevorzugt mit ca. 12 bis ca. 18 Kohlenstoffatomen. Diese Verbindungen werden z.B. von der Clariant GmbH unter dem Handelsnamen ®Genagen LAB vermarktet.

Geeignete kationische Tenside sind substituierte oder unsubstituierte geradkettige oder verzweigte quartäre Ammoniumsalze vom Typ R¹N(CH₃)₃^{⊕}X^{⊖}, R¹R²N(CH₃)₂^{⊕}X^{⊖}, R¹R²R³N(CH₃)^{⊕}X^{⊖} oder R¹R²R³R⁴N^{⊕}X^{⊖}. Die Reste R¹, R², R³ und R⁴ können vorzugsweise unabhängig voneinander unsubstituiertes Alkyl mit einer Kettenlänge zwischen 8 und 24 C-Atomen, insbesondere zwischen 10 und 18 C-Atomen, Hydroxyalkyl mit ca. 1 bis ca. 4 C-Atomen, Phenyl, C₂- bis C₁₈-Alkenyl, C₇- bis C24-Aralkyl, (C₂H₄O)ₓH, wobei x von ca. 1 bis ca. 3 bedeutet, ein oder mehrere Estergruppen enthaltende Alkylreste oder cyclische quartäre Ammoniumsalze sein. X ist ein geeignetes Anion.

Weitere Wasch- und Reinigungsmittelinhaltsstoffe, die in der vorliegenden Erfindung enthalten sein können, umfassen anorganische und/oder organische Gerüststoffe, um den Härtegrad des Wassers zu mindern.

Diese Gerüststoffe können mit Gewichtsanteilen von etwa 5 % bis etwa 80 % in den Wasch- und Reinigungsmittelzusammensetzungen enthalten sein. Anorganische Gerüststoffe umfassen beispielsweise Alkali-, Ammonium- und Alkanolammoniumsalze von Polyphosphaten wie etwa Tripolyphosphate, Pyrophosphate und glasartige polymere Metaphosphate, Phosphonaten, Silikaten, Carbonaten einschließlich Bicarbonate und Sesquicarbonate, Sulfaten und Aluminosilikaten.

Beispiele für Silikatgerüststoffe sind die Alkalimetallsilikate, insbesondere diejenigen mit einem SiO₂:Na₂O-Verhältnis zwischen 1,6:1 und 3,2:1 sowie Schichtsilikate, beispielsweise Natriumschichtsilikate, wie beschrieben in US-4,664,839, erhältlich von Clariant GmbH unter der Marke SKS®, SKS-6® ist ein besonders bevorzugter Schichtsilikatgerüststoff.

Aluminosilikatgerüststoffe sind für die vorliegende Erfindung besonders bevorzugt. Es handelt sich dabei insbesondere um Zeolite mit der Formel Na_{z}[(AlO₂)_{z}(SiO₂)_{y}]•xH₂O, worin z und y ganze Zahlen von mindestens 6 bedeuten, das Verhältnis von z zu y zwischen 1,0 bis etwa 0,5 liegt, und x eine ganze Zahl von etwa 15 bis etwa 264 bedeutet.

Geeignete lonentauscher auf Aluminosilikatbasis sind im Handel erhältlich. Diese Aluminosilikate können von kristalliner oder amorpher Struktur sein, und können natürlich vorkommend oder auch synthetisch hergestellt sein. Verfahren für die Herstellung von lonentauschern auf Aluminosilikatbasis werden beschrieben in US-3,985,669 und US-4,605,509. Bevorzugte lonentauscher auf der Basis synthetischer kristalliner Aluminosilikate sind erhältlich unter der Bezeichnung Zeolit A, Zeolit P(B) (einschließlich der in EP-A-0 384 070 offenbarten) und Zeolit X. Bevorzugt sind Aluminosilikate mit einem Partikeldurchmesser zwischen 0,1 und 10 µm.

Geeignete organische Gerüststoffe umfassen Polycarboxylverbindungen, wie beispielsweise Etherpolycarboxylate und Oxydisuccinate, wie beispielsweise in US-3,128,287 und US-3,635,830 beschrieben. Ebenfalls soll auf "TMS/TDS"-Gerüststoffe aus US-4,663,071 verwiesen werden.

Andere geeignete Gerüststoffe umfassen die Etherhydroxypolycarboxylate, Copolymere von Maleinsäureanhydrid mit Ethylen oder Vinylmethylether, 1,3,5-Trihydroxybenzol-2,4,6-trisulfonsäure und Carboxymethyloxybernsteinsäure, die Alkali-, Ammonium- und substituierten Ammoniumsalze von Polyessigsäuren wie z.B. Ethylendiamintetraessigsäure und Nitrilotriessigsäure, sowie Polycarbonsäuren, wie Mellithsäure, Bernsteinsäure, Oxydibernsteinsäure, Polymaleinsäure, Benzol-1,3,5-tricarbonsäure, Carboxymethyloxybernsteinsäure, sowie deren lösliche Salze.

Gerüststoffe auf Citratbasis, z.B. Zitronensäure und ihre löslichen Salze, insbesondere das Natriumsalz, sind bevorzugte Polycarbonsäuregerüststoffe, die auch in granulierten Formulierungen, insbesondere zusammen mit Zeoliten und/oder Schichtsilikaten verwendet werden können.

Weitere geeignete Gerüststoffe sind die 3,3-Dicarboxy-4-oxa-1,6-hexandioate und die verwandten Verbindungen, die in US-4,566,984 offenbart sind.

Wenn Gerüststoffe auf Phosphorbasis verwendet werden können, und insbesondere wenn Seifenstücke für die Wäsche von Hand formuliert werden sollen, können verschiedene Alkalimetallphosphate wie etwa Natriumtripolyphosphat, Natriumpyrophosphat und Natriumorthophosphat verwendet werden. Ebenfalls können Phosphonatgerüststoffe, wie Ethan-1-hydroxy-1,1-diphosphonat und andere bekannte Phosphonate wie sie beispielsweise in US-3,159,581, US-3,213,030, US-3,422,021, US-3,400,148 und US-3,422,137 offenbart sind, verwendet werden.

In einer bevorzugten Ausführungsform der Erfindung können die konventionellen Reinigungsmittelinhaltsstoffe aus für Reinigungsmittel typischen Komponenten, wie oberflächenaktive Stoffe und Gerüststoffe ausgewählt werden. Gegebenenfalls können die Reinigungsmittelinhaltsstoffe einen oder mehrere Reinigungshilfsstoffe oder andere Materialien enthalten, die die Reinigungswirkung verstärken, zur Behandlung oder Pflege des zu reinigenden Gegenstandes dienen oder die Gebrauchseigenschaften der Reinigungsmittelzusammensetzung ändern.

Geeignete Reinigungshilfsmittel in Reinigungsmittelzusammensetzungen umfassen die in US-3,936,537 genannten Stoffe. Die Reinigungshilfsstoffe, die in den Reinigungsmittelzusammensetzungen der vorliegenden Erfindung benutzt werden können, umfassen beispielsweise Enzyme, insbesondere Proteasen, Lipasen und Cellulasen, Schaumverstärker, Schaumbremsen, Anlauf- und/oder Korrosionsschutzmittel, Suspensionsmittel, Farbstoffe, Füllmittel, optische Aufheller, Desinfektionsmittel, Alkalien, hydrotrope Verbindungen, Antioxidantien, Enzymstabilisatoren, Parfüme, Lösungsmittel, Lösungsvermittler, Wiederablagerungsverhinderer, Dispergiermittel, Farbübertragungsinhibitoren, z. B. Polyamin-N-oxide wie etwa Poly-(4-vinylpyridin-N-oxid), Polyvinylpyrrolidon, Poly-N-vinyl-N-methylacetamid und Copolymere von N-Vinylimidazol und N-Vinylpyrrolidon, Verarbeitungshilfsmittel, Weichmacher und Antistatikhilfsmittel.

Die Wasch- und Reinigungsmittelzusammensetzungen der vorliegenden Erfindung können gegebenenfalls einen oder mehrere konventionelle Bleichmittel enthalten, sowie Aktivatoren oder Stabilisatoren, insbesondere Peroxysäuren, die nicht mit den erfindungsgemäßen Schmutzlöseoligoestern reagieren. Im allgemeinen muß sichergestellt sein, daß die verwendeten Bleichmittel mit den Reinigungsmittelinhaltsstoffen verträglich sind. Konventionelle Prüfmethoden, wie etwa die Bestimmung der Bleichaktivität des fertig formulierten Reinigungsmittels in Abhängigkeit von der Lagerungszeit können für diesen Zweck verwendet werden.

Die Peroxysäure kann entweder eine freie Peroxysäure sein, oder eine Kombination aus einem anorganischen Persalz, beispielsweise Natriumperborat oder Natriumpercarbonat und einem organischen Peroxysäure-Vorläufer, der zu einer Peroxysäure umgewandelt wird, wenn die Kombination des Persalzes und des Peroxysäure-Vorläufers in Wasser aufgelöst wird. Die organischen Peroxysäure-Vorläufer werden im Stand der Technik oft als Bleichaktivatoren bezeichnet.

Beispiele geeigneter organischer Peroxysäuren sind offenbart in US-4,374,035, US-4,681,592, US-4,634,551, US-4,686,063, US-4,606,838 und US-4,671,891.

Beispiele für Zusammensetzungen, die zum Bleichen von Wäsche geeignet sind und die Perboratbleichmittel und Aktivatoren enthalten, werden beschrieben in US-4,412,934, US-4,536,314, US-4,681,695 und US-4,539,130.

Beispiele für Peroxysäuren, die für die Verwendung in dieser Erfindung bevorzugt sind, umfassen die Peroxydodecandisäure (DPDA), das Nonylamid der Peroxybernsteinsäure (NAPSA), das Nonylamid der Peroxyadipinsäure (NAPAA) und Decyldiperoxybernsteinsäure (DDPSA). Die Peroxysäure ist vorzugsweise in einem löslichen Granulat enthalten, entsprechend der Methode aus US-4,374,035. Ein bevorzugtes Bleichgranulat enthält, in Gewichtsprozenten, 1 % bis 50 % einer exotherm löslichen Verbindung, wie beispielsweise Borsäure; 1 % bis 25 % eines mit der Peroxysäure verträglichen oberflächenaktiven Wirkstoffes, wie beispielsweise C13LAS; 0,1 % bis 10 % eines oder mehrerer Chelatstabilisatoren, wie beispielsweise Natriumpyrophosphat; und 10 % bis 70 % eines wasserlöslichen Salzes, wie beispielsweise Natriumsulfat.

Das peroxysäurehaltige Bleichmittel wird in Mengen verwendet, die eine Menge von verfügbarem Sauerstoff zwischen etwa 0,1 % bis etwa 10 %, vorzugsweise zwischen etwa 0,5 % bis etwa 5 %, insbesondere von etwa 1 % bis 4 % ergeben. Die Prozentangaben beziehen sich auf das Gesamtgewicht der Reinigungsmittelzusammensetzung.

Geeignete Mengen des peroxysäurehaltigen Bleichmittels, bezogen auf eine Einheitsdosis der erfindungsgemäßen Reinigungsmittelzusammensetzung, wie sie für eine typische Waschflotte verwendet wird, die etwa 65 Liter Wasser von 15 bis 60°C umfaßt, erzeugen zwischen etwa 1 ppm bis etwa 150 ppm verfügbaren Sauerstoffs, vorzugsweise zwischen etwa 2 ppm bis etwa 20 ppm verfügbaren Sauerstoffs. Die Waschflotte sollte einen pH-Wert zwischen 7 und 11 aufweisen, vorzugsweise zwischen 7,5 und 10,5, um ein hinreichendes Bleichergebnis zu erzielen. Es wird auf Spalte 6, Zeilen 1 bis 10 von US-4,374,035 verwiesen.

Alternativ dazu kann die Bleichmittelzusammensetzung einen geeigneten organischen Peroxysäurevorläufer enthalten, der eine der oben genannten Peroxysäuren erzeugt, wenn er in wäßriger alkalischer Lösung mit Wasserstoffperoxid reagiert. Die Quelle des Wasserstoffperoxids kann jedes anorganische Peroxid sein, das in wäßriger Lösung Wasserstoffperoxid freisetzt, wie etwa Natriumperborat (Monohydrat und Tetrahydrat) und Natriumpercarbonat.

Der Anteil der peroxidhaltigen Bleichmittel in den erfindungsgemäßen Reinigungsmittelzusammensetzungen liegt zwischen etwa 0,1 Gew.-% bis etwa 95 Gew.-% und vorzugsweise zwischen etwa 1 Gew.-% und etwa Gew.-60 %. Wenn die Bleichmittelzusammensetzung auch eine voll formulierte Reinigungsmittelzusammensetzung ist, ist bevorzugt, daß der Anteil des peroxidhaltigen Bleichmittels zwischen etwa 1 Gew.-% bis etwa 20 Gew.-% liegt.

Die Menge an Bleichaktivatoren, die mit den erfindungsgemäßen Schmutzlöseoligoestern verwendet werden kann, liegt im allgemeinen zwischen 0,1 und 60 Gew.-%, bevorzugt zwischen 0,5 und 40 Gew.-%. Sind die verwendeten Bleichmittelzusammensetzungen gleichzeitig vollständig formulierte Waschmittelzusammensetzungen, so beträgt die Menge an Bleichaktivatoren, die in ihnen enthalten ist, vorzugsweise zwischen etwa 0,5 und 20 Gew.-%.

Die Peroxysäure und die erfindungsgemäßen Schmutzlöseoligoester sind bevorzugt in einem Gewichtsverhältnis zwischen verfügbarem Sauerstoff aus der Peroxysäure zu erfindungsgemäßem Schmutzlöseoligoester von etwa 4:1 bis etwa 1:30, insbesondere von etwa 2:1 bis etwa 1:15, und speziell von etwa 1:1 bis etwa 1:7,5 vor. Diese Kombination kann sowohl als voll formuliertes Produkt als auch als Additiv zu einem Waschmittel verwendet werden.

Die erfindungsgemäßen Reinigungsmittelzusammensetzungen können ein oder mehrere konventionelle Enzyme enthalten, die nicht mit den erfindungsgemäßen Schmutzlöseoligoestern dieser Erfindung reagieren. Ein besonders bevorzugtes Enzym ist Cellulase. Die hierbei verwendete Cellulase kann aus Bakterien oder Pilzen gewonnen sein und soll einen optimalen pH-Bereich zwischen 5 und 9,5 aufweisen. Geeignete Cellulasen sind in US-4,435,307 offenbart. Es handelt sich dabei um Cellulase, die von einem Stamm von Humicola insolens produziert wird, insbesondere vom Stamm Humicola DSM 1800 oder einem anderen Cellulase-212-produzierenden Pilz, der zur Gattung Aeromonas gehört, sowie Cellulase, die aus dem Hepatopankreas bestimmter mariner Mollusken extrahiert wurde. Geeignete Cellulasen sind ebenfalls in GB-A-2,075,028, GB-A-2,085,275 und DE-OS-2,247,832 offenbart.

Bevorzugte Cellulasen sind in WO-91/17243 beschrieben. Die erfindungsgemäßen Reinigungsmittelzusammensetzungen enthalten Enzyme in Mengen bis etwa 50 mg, bevorzugt von etwa 0,01 mg bis etwa 10 mg pro Gramm der Reinigungsmittelzusammensetzung. Bezogen auf das Gewicht der Wasch- und Reinigungsmittelzusammensetzungen, die die erfindungsgemäßen Schmutzlöseoligoester enthalten, beträgt der Anteil der Enzyme mindestens 0,001 Gew.-%, bevorzugt zwischen etwa 0,001 Gew.-% bis etwa 5 Gew.-%, insbesondere von etwa 0,001 Gew.-% bis etwa 1 Gew.-%, speziell von etwa 0,01 Gew.-% bis etwa 1 Gew.-%.

Die erfindungsgemäßen Schmutzlöseoligoester, die in wäßrigen Textilwaschflotten in Konzentrationen zwischen etwa 1 bis etwa 180 ppm verwendet werden, bevorzugt in Konzentrationen zwischen etwa 30 bis etwa 90 ppm, bewirken eine effektive reinigende und schmutzablösende Behandlung für Polyester, Polyesterbaumwollmischungen und andere synthetische Gewebe. Die Textilwaschflotten sind vorzugsweise alkalisch mit einem pH-Bereich zwischen etwa 7 bis etwa 11, insbesondere zwischen etwa 7,5 bis etwa 10,5, wobei typische Waschmittelinhaltsstoffe zugegen sind. Überraschenderweise, insbesondere insoweit als der pH-Wert und anionische oberflächenaktive Verbindungen betroffen sind, können die üblicherweise in Wasch- und Reinigungsmitteln enthaltenen Detergenzien auch in den erfindungsgemäßen Reinigungsmitteln in den Mengen verwendet werden, wie es dem Stand der Technik entspricht. Sie erfüllen dabei ihren üblichen Zweck, d.h. beispielsweise das Reinigen oder Bleichen von Gewebe, ohne daß sie einen nachteiligen Effekt auf die schmutzablösenden Eigenschaften der erfindungsgemäßen Schmutzlöseoligoester aufweisen.

Die erfindungsgemäßen Schmutzlöseoligoester können zur Erzielung eines Soll Release Finish auch in handelsüblichen Wäscheweichspülern für die Haushaltsanwendung eingesetzt werden. Diese enthalten im wesentlichen weichmachende Komponenten, Co-Weichmacher, Emulgatoren, Parfüme, Farbstoffe und Elektrolyte, und sind auf einen sauren pH-Wert von unterhalb 7, bevorzugt zwischen 3 und 5, eingestellt.

Als weichmachende Komponenten werden quartäre Ammoniumsalze vom Typ 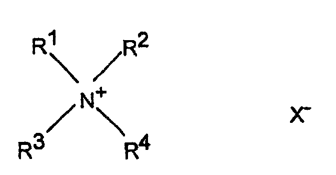 eingesetzt, worin
- R¹ =: C₈-C₂₄ n-, bzw. iso-Alkyl, bevorzugt C₁₀-C₁₈ n-Alkyl
- R² =: C₁-C₄-Alkyl, bevorzugt Methyl
- R³ =: R¹ oder R²
- R⁴ =: R² oder Hydroxyethyl oder Hydroxypropyl oder deren Oligomere
- X⁻ =: Bromid, Chlorid, Jodid, Methosulfat, Acetat, Propionat, Lactat
sind.

Beispiele hierfür sind Distearyldimethylammoniumchlorid, Ditalgalkyldimethylammoniumchlorid, Ditalgalkylmethylhydroxypropylammoniumchlorid, Cetyltrimethylammoniumchlorid oder auch die entsprechenden Benzylderivate wie etwa Dodecyldimethylbenzylammoniumchlorid. Cyclische quartäre Ammoniumsalze, wie etwa Alkyl-Morpholinderivate können ebenfalls verwendet werden.

Darüber hinaus können neben den quartären Ammoniumverbindungen Imidazolinium-Verbindungen (1) und Imidazolinderivate (2) eingesetzt werden. 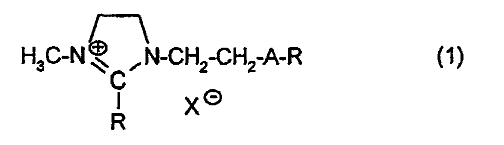 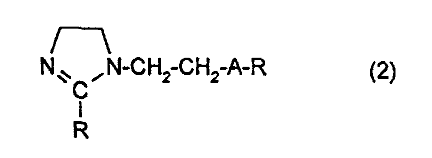 worin
- R =: C₈-C₂₄ n-, bzw. iso-Alkyl, bevorzugt C₁₀-C₁₈ n-Alkyl
- X =: Bromid, Chlorid, Jodid, Methosulfat
- A =: -NH-CO-, -CO-NH-, -O-CO-, -CO-O-
ist.

Eine besonders bevorzugte Verbindungsklasse sind die sogenannten Esterquats. Es handelt sich hierbei um Umsetzungsprodukte von Alkanolaminen und Fettsäuren, die anschließend mit üblichen Alkylierungs- oder Hydroxyalkylierungsagenzien quatemiert werden.

Bevorzugt als Alkanolamine sind Verbindungen gemäß der Formel 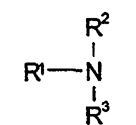 mit
- R¹ =: C₁-C₃ Hydroxyalkyl, bevorzugt Hydroxyethyl und
- R², R3 =: R¹ oder C₁-C₃ Alkyl, bevorzugt Methyl.

Besonders bevorzugt sind Triethanolamin und Methyldiethanolamin.

Weitere besonders bevorzugte Ausgangsprodukte für Esterquats sind Aminoglycerinderivate, wie z. B. Dimethylaminopropandiol.

Alkylierungs- bzw. Hydroxyalkylierungsagenzien sind Alkylhalogenide, bevorzugt Methylchlorid, Dimethylsulfat, Ethylenoxid und Propylenoxid.

Beispiele für Esterquats sind Verbindungen der Formeln: 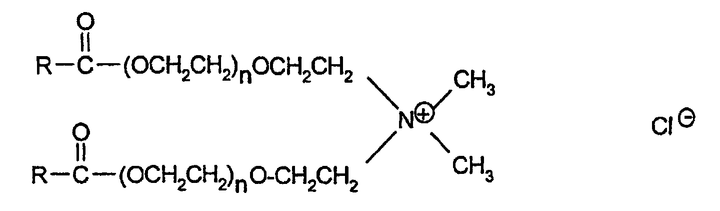 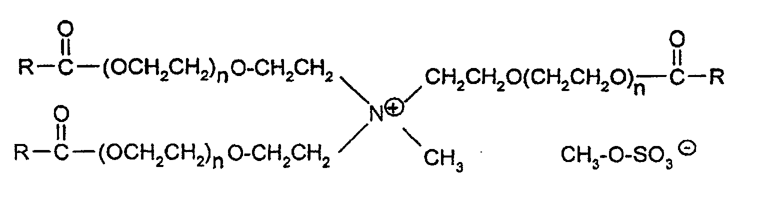 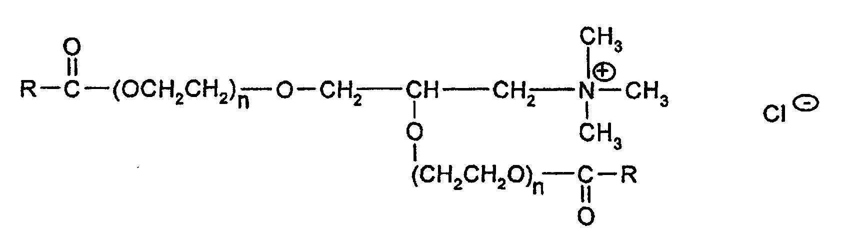 wobei R-C-O abgeleitet ist von C₈-C₂₄-Fettsäuren, die gesättigt oder ungesättigt sein können. Beispiele hierfür sind Capronsäure, Caprylsäure, hydrierte oder nicht oder nur teilweise hydrierte Talgfettsäuren, Stearinsäure, Ölsäure, Linolensäure, Behensäure, Palminstearinsäure, Myristinsäure und Elaidinsäure. n liegt im Bereich von 0 bis 10, vorzugsweise 0 bis 3, besonders bevorzugt 0 bis 1.

Weitere bevorzugte Wäscheweichspülerrohstoffe mit denen die erfindungsgemäßen Schmutzlöseoligoester kombiniert werden können sind Amido-Amine auf der Basis von beispielsweise Dialkyltriaminen und langkettigen Fettsäuren, sowie deren Oxethylate bzw. quaternierten Varianten. Diese Verbindungen besitzen folgende Struktur: 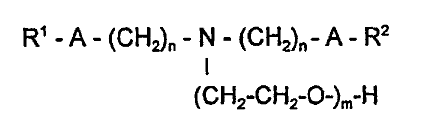 worin
- R¹ und R²: unabhängig voneinander C8 - C₂₄ n- bzw. iso-Alkyl, bevorzugt C₁₀-C₁₈ n-Alkyl,
- A: -CO - NH- oder -NH -CO-,
- n: 1-3, bevorzugt 2,
- m: 1 - 5, bevorzugt 2 - 4
bedeuten.

Durch Quaternierung der tertiären Aminogruppe kann zusätzlich ein Rest R³, welcher C₁-C₄-Alkyl, bevorzugt Methyl, sein kann und ein Gegenion X, welches Chlorid, Bromid, Jodid oder Methylsulfat sein kann, eingeführt werden. Amidoaminooxethylate bzw. deren quaternierten Folgeprodukte werden unter den Handelsnamen ®Varisoft 510, ®Varisoft 512, ®Rewopal V 3340 und ®Rewoquat W 222 LM angeboten.

Die bevorzugten Anwendungskonzentrationen der erfindungsgemäßen Oligoester in den Weichspülerformulierungen entsprechen denen, die für Waschmittelformulierungen genannt sind.

Neben den genannten Anwendungen in Waschmitteln und Weichspülern/Wäschenachbehandlungsmitteln können die erfindungsgemäßen Oligoester in allen Haushaltsreinigungsmitteln und allen technischen Reinigungsmitteln eingesetzt werden um einen guten Soil Release Effekt gegenüber hydrophoben Verschmutzungen zu erzielen. Die Haushaltsreinigungsmittel und technischen Reinigungsmittel können die oben genannten repräsentativen Beispiele für Tenside, Builder, optische Aufheller, Bleichmittel und Enzyme enthalten.

Beispiele für Haushaltsreinigungsmittel sind Allzweckreiniger, Geschirrspülmittel, Teppichreinigungs- und Imprägniermittel, Reinigungs- und Pflegemittel für Böden und andere harte Oberfläche, z.B. aus Kunststoff, Keramik, Glas.

Beispiele für technische Reinigungsmittel sind Kunststoffreinigungs- und Pflegemittel, etwa für Gehäuse und Autoarmaturen, sowie Reinigungs- und Pflegemittel für lackierte Oberflächen wie etwa Autokarosserien.

Flüssig formulierte Reinigungsmittel, die die erfindungsgemäßen Oligoester enthalten, weisen im allgemeinen einen neutralen bis sauren pH-Wert auf.

### Beispiele

### Beispiel 1:

In einem 1-l-Vierhalskolben mit KPG-Rührer, 20 cm Vigreux-Kolonne mit Claisen-Brücke, Innenthermometer und Gaseinleitungsrohr werden 194,2 g Dimethylterephthalat, 39,8 g Ethylenglykol, 96,6 g 1,2-Propylenglykol, 9,2 g Glycerin, 0,37 g wasserfreies Natriumacetat und 0,19 g Titantetraisopropylat vorgelegt. Dann wird mit Stickstoff inertisiert und innerhalb einer halben Stunde auf 165 - 167 °C erhitzt. Innerhalb von weiteren 2,5 Stunden wird die Temperatur auf 215 - 220 °C erhöht. Bei ca. 165 °C Innentemperatur beginnt die Umesterung und somit die Destillation von Methanol. Nach ca. 5 Stunden sind > 98 % der zu erwartenden Methanolmenge abdestilliert. Der Ansatz wird auf ca. 80 °C abgekühlt, dann werden 72,0 g Methylpolyethylenglykol 750, 91,2 g Methylpolyethylenglykol 1820 und 387,5 g Polyethylenglykol 1500 zugegeben. Der Kolben wird wiederum inertisiert und auf 200 - 220 °C aufgeheizt, dann wird im Verlaufe von ca. 1 Stunde der Druck auf 1-5 mbar abgesenkt und bei 220 - 240 °C weitere 2 - 5 Stunden kondensiert, wobei ein Gemisch aus Ethylenglykol und 1,2-Propylenglykol abdestilliert. Nach Beendigung der Kondensation wird mit Stickstoff belüftet und abgekühlt. Das Produkt erstarrt beim Abkühlen auf Raumtemperatur zu einer festen Masse. Ausbeute 730 g.

Analog zu Beispiel 1 können auch mit den folgenden Ausgangsstoffen die erfindungsgemäßen Oligoester hergestellt werden:

### Beispiel 2

| | |
|---|---|
| 213,5 g | Dimethylterephthalat |
| 43,7 g | Ethylenglykol |
| 106,2 g | 1,2-Propylenglykol |
| 4,5 g | Pentaerythrit |
| 0,41 g | Natriumacetat wasserfrei |
| 0,21 g | Titantetraisopropylat |
| 39,6 g | Methylpolyethylenglykol 750 |
| 50,2 g | Methylpolyethylenglykol 1820 |
| 426,3 g | Polyethylenglykol 1500 |
| Ausbeute 720 g | |

### Beispiel 3

| | |
|---|---|
| 145,6 g | Dimethylterephthalat |
| 109,0 g | 1,2-Propylenglykol |
| 1,4 g | Mannit |
| 0,28 g | Natriumacetat wasserfrei |
| 0,14 g | Titantetraisopropylat |
| 82,2 g | Methylpolyethylenglykol 750 |
| 581,3 g | Polyethylenglykol 3000 |
| Ausbeute 800 g | |

### Beispiel 4

| | |
|---|---|
| 194,2 g | Dimethylterephthalat |
| 39,8 g | Ethylenglykol |
| 96,6 g | 1,2-Propylenglykol |
| 6,0 g | Trimethylolethan |
| 0,37 g | Natriumacetat wasserfrei |
| 0,19 g | Titantetraisopropylat |
| 54,0 g | Methylpolyethylenglykol 750 |
| 68,4 g | Methylpolyethylenglykol 1820 |
| 68,9 g | Polyethylenglykol 1500 |
| 129,2 g | Polyethylenglykol 800 |
| 258,3 g | Polyethylenglykol 3000 |
| Ausbeute 760 g | |

### Beispiel 5

| | |
|---|---|
| 223,3 g | Dimethylterephthalat |
| 45,7 g | Ethylenglykol |
| 111,1 g | 1,2-Propylenglykol |
| 1,6 g | Pentaerythrit |
| 0,42 g | Natriumacetat wasserfrei |
| 0,22 g | Titantetraisopropylat |
| 28,2 g | Methylpolyethylenglykol 750 |
| 35,7 g | Methylpolyethylenglykol 1820 |
| 445,6 g | Polyethylenglykol 1500 |
| Ausbeute 720 g | |

### Beispiel 6

| | |
|---|---|
| 174,7 g | Dimethylterephthalat |
| 19,0 g | Ethylenglykol |
| 107,5 g | 1,2-Propylenglykol |
| 3,3 g | Trimethylolethan |
| 0,33 g | Natriumacetat wasserfrei |
| 0,17 g | Titantetraisopropylat |
| 83,8 g | Methylpolyethylenglykol 750 |
| 174,4 g | Polyethylenglykol 1500 |
| 348,8 g | Polyethylenglykol 3000 |
| Ausbeute 765 g | |

### Beispiel 7:

| | |
|---|---|
| 48,5 g | Dimethylterephthalat |
| 10,0 g | Ethylenglykol |
| 24,2 g | 1,2-Propylenglykol |
| 3,5 g | Glyzerin |
| 0,10 g | Natriumacetat wasserfrei |
| 0,05 g | Titantetraisopropylat |
| 730 g | Methylpolyethylenglykol 20000 |
| 97,0 g | Polyethylenglykol 1500 |
| Ausbeute 880 g | |

### Beispiel 8:

| | |
|---|---|
| 233,0 g | Dimethylterephthalat |
| 47,7 g | Ethylenglykol |
| 115,9 g | 1,2-Propylenglykol |
| 8,1 g | 1,2,3-Hexantriol |
| 0,44 g | Natriumacetat wasserfrei |
| 0,23 g | Titantetraisopropylat |
| 22,8 g | n-Butylpolyethylenglykol 200 |
| 465,0 g | Polyethylenglykol 1500 |
| Ausbeute | 700 g |

### Beispiel 9:

| | |
|---|---|
| 194,2 g | Dimethylterephthalat |
| 39,8 g | Ethylenglykol |
| 96,6 g | 1,2-Propylenglykol |
| 1,0 g | Glyzerin |
| 0,37 g | Natriumacetat wasserfrei |
| 0,19 g | Titantetraisopropylat |
| 226,5 g | Talgfettalkohol + 80 mol Ethylenoxid |
| 387,5 g | Polyethylenglykol 1500 |
| Ausbeute 800 g | |

### Beispiel 10:

| | |
|---|---|
| 194,2 g | Dimethylterephthalat |
| 39,8 g | Ethylenglykol |
| 96,6 g | 1,2-Propylenglykol |
| 4,6 g | Glyzerin |
| 0,37 g | Natriumacetat wasserfrei |
| 0,19 g | Titantetraisopropylat |
| 180,3 g | Nonylphenol + 23 mol Ethylenoxid |
| 387,5 g | Polyethylenglykol 1500 |
| Ausbeute 805 g | |

Die erfindungsgemäßen Schmutzlöseoligoester wurden auf ihren Soil Release Effekt hin mit Soil Release Polymeren des Standes der Technik verglichen.

Dazu wurden die Substanzen in Konzentrationen von 1 und 2 % (Wirkstoff), bezogen auf die Waschmittelformulierung (siehe Tabelle 2), der Waschlauge zugesetzt, mit der Polyester WFK 30 A Testgewebe (Wäschereiforschungsanstalt Krefeld) vorgewaschen wurde. Die so vorbehandelten Gewebe wurden getrocknet und mit gebrauchtem Motorenöl angeschmutzt. Nach einer Einwirkzeit von 1 Stunde wurden die Testlappen ohne Zusatz der erfindungsgemäßen Schmutzlöseoligoester oder von Soil Release Polymeren gemäß dem Stand der Technik gewaschen. Anschließend wurde die Remission der Testgewebe gemessen. Als Soil Release Polymere des Standes der Technik wurden folgende Verbindungen verwendet:

### Vergleichsbeispiel 1:

Verbindungen gemäß EP-B-0 185 427 Seite 23, Tabelle IV, Zeile 4, verwendet in der jeweils in der Tabelle angegebenen Menge.

### Vergleichsbeispiel 2:

Verbindungen gemäß EP-B-0 185 427, Seite 23, Tabelle IV, Zeile 5, verwendet in der jeweils in der Tabelle angegebenen Menge.

### Vergleichsbeispiel 3:

Repel-O-Tex SRP 4, Rhöne-Poulenc, verwendet in der jeweils in der Tabelle angegebenen Menge.

### Vergleichsbeispiel 4:

Sokalan 9976, BASF, verwendet in der jeweils in der Tabelle angegebenen Menge.

**Tabelle 1**

| Waschbedingungen | |
|---|---|
| Waschmaschine: | Linitest |
| Wasserhärte: | 20° dH |
| Flottenverhältnis | 1 : 40 |
| Waschtemperatur: | 40° C |
| Waschzeit: | 30 Min. |
| Waschmittelkonz.: | 6 g/l |

**Tabelle 2**

| Zusammensetzung des Flüssigwaschmittels | |
|---|---|
| Flüssigwaschmittel I | Zusammensetzung (Gew.-%) |
| | |
| Genapol® OA 080 | 12,0 |
| Hostapur® SAS 60 | 17,0 |
| Fettsäuremischung Cocos/ Olein | 14,0 |
| KOH 85%ig | 2,6 |
| Triethanolamin | 2,0 |
| Tri-Na-citratdihydrat | 5,0 |
| Dequest 2066 | 4,0 |
| 1,2-Propylenglykol | 5,0 |
| Ethanol | 3,0 |
| Wasser | ad 100 |

**Tabelle 3**

| Waschergebnisse mit den erfindungsgemäßen Oligoestern zusammen mit Flüssigwaschmittel I | |
|---|---|
| Waschmittelformulierung I | Remission (%) |
| | |
| I ohne Zusatz | 21,5 |
| I + 1% Oligoester gemäß: | |
| Bsp.1 | 41,7 |
| Bsp. 2 | 39,2 |
| Bsp. 3 | 38,9 |
| Bsp. 4 | 39,8 |
| Bsp. 5 | 40 |
| Bsp. 6 | 38,9 |
| Bsp. 7 | 31,8 |
| Bsp. 8 | 39,1 |
| Bsp. 9 | 35,1 |
| Bsp. 10 | 39,6 |

**Tabelle 4**

| Waschergebnisse mit den erfindungsgemäßen Oligoestern im Vergleich zu Soil Release Polyestern des Standes der Technik. Applikation mit Flüssigwaschmittel I | |
|---|---|
| Waschmittelformulierung I | Remission (%) |
| | |
| I ohne Zusatz | 21,9 |
| I + 1% Oligoester: | |
| Vergleichsbeispiel 1 | 24,8 |
| Vergleichsbeispiel 2 | 22,6 |
| Vergleichsbeispiel 3 | 32,0 |
| Vergleichsbeispiel 4 | 26,3 |
| Bsp.1 | 40,9 |
| Bsp. 5 | 40 |
| Bsp. 6 | 38,9 |

**Tabelle 5**

| Waschergebnisse abhängig von der Applikationskonzentration. Vergleich zu einem Soil Release Polyester des Standes der Technik. | |
|---|---|
| Waschmittelformulierung I | Remission (%) |
| | |
| I ohne Zusatz | 21,5 |
| I+1% Vergleichsbeispiel 3 | 31,5 |
| I + 1% Oligoester Bsp.1 | 41,5 |
| I+2% Vergleichsbeispiel 3 | 36,0 |
| I + 2% Oligoester Bsp. 1 | 44,6 |

Die erfindungsgemäßen Schmutzlöseoligoester wurden ebenfalls auf eine waschverstärkende Wirkung hin an Testschmutzgewebe der Wäschereiforschungsanstalt Krefeld untersucht.

Dazu wurden sie zusammen mit dem Flüssigwaschmittel gemäß Tabelle 2 appliziert: Als Vergleich dienten Soil Release Polymere des Standes der Technik.

Anschließend wurde Testschmutzgewebe WFK 30 C und WFK 30 D gewaschen und die Remissionen gemessen. Es wurden jeweils vier Waschzyklen durchgeführt. Die Waschbedingungen entsprechen denen in Tabelle 1. Es resultierten die folgenden Ergebnisse:

**Tabelle 6**

| Waschverstärkende Wirkung der beschriebenen Oligoester an WFK 30 C | | | | |
|---|---|---|---|---|
| Waschmittelformulierung I | Remission (%) abhängig von den Waschzyklen | | | |
| | 1x | 2x | 3x | 4x |
| | | | | |
| I ohne Zusatz | 35,0 | 36,4 | 37,7 | 38,5 |
| I+1% Vergleichsbeispiel 3 | 35,6 | 38,5 | 40,7 | 42,6 |
| I + 1% Bsp.1 | 35,9 | 43,8 | 55,0 | 62,8 |

**Tabelle 7**

| Waschverstärkende Wirkung der beschriebenen Oligoester an WFK 30 D | | | | |
|---|---|---|---|---|
| Waschmittelformulierung I | Remission (%) abhängig von den Waschzyklen | | | |
| | 1x | 2x | 3x | 4x |
| | | | | |
| I ohne Zusatz | 41,8 | 44,7 | 46,6 | 47,9 |
| I+1% Vergleichsbeispiel 3 | 44,0 | 51,1 | 56,3 | 60,2 |
| I + 1% Bsp.1 | 47,0 | 59,7 | 64,7 | 66,9 |

### Verzeichnis der verwendeten Handelsnamen

®Genapol OA 080 / reines C₁₄/C₁₅-Fettalkoholethoxylat mit 8 EO Clariant GmbH
®Hostapur SAS 60 / sekundäres C₁₃-C₁₇ n-Alkansulfonat-Natriumsalz, 60 %ig Clariant GmbH

- ®Repel-O-Tex / Rhône-Poulenc: Ethylenglykol-Polyethylenglykol-Terephthalsäure-Copolymer zu 70%, Rest Natriumsulfat und Natriumaluminiumsilikat
- ®Sokalan 9976 / BASF: 50 % nichtionisches Polykondensat auf 50 % Na₂SO₄
- ®Dequest 2066 / Monsanto: 25 %ige wäßrige Lösung des Heptanatriumsalzes der Diethylentriamin-penta-(Methylenphosphonsäure)

## Patentansprüche

1. Oligoester erhalten durch Polykondensation von
a) 40 bis 52, vorzugsweise 45 bis 50 mol% einer oder mehrerer Dicarbonsäuren oder deren Ester,
b) 10 bis 40, vorzugsweise 20 bis 35 mol% Ethylenglykol und/oder Propylenglykol,
c) 3 bis 20, vorzugsweise 10 bis 15 mol% Polyethylenglykol,
d) 0,5 bis 10, vorzugsweise 1 bis 7,5 mol% eines wasserlöslichen Anlagerungsproduktes von 5 bis 80 mol eines Alkylenoxids an 1 mol C₁-C₂₄-Alkohole, C₆-C₁₈-Alkylphenole oder C₈-C₂₄-Alkylamine und
e) 0,4 bis 10, vorzugsweise 0,5 bis 8 mol% eines oder mehrerer Polyole mit 3 bis 6 Hydroxylgruppen.

2. Verfahren zur Herstellung der Oligoester nach Anspruch 1, **dadurch gekennzeichnet, daß** man die Komponenten a, b, c, d und e unter Zusatz eines Katalysators zunächst bei Normaldruck auf Temperaturen von 160 bis 220°C erhitzt und dann die Reaktion im Vakuum bei Temperaturen von 160 bis 240°C fortsetzt.

3. Verwendung eines Oligoesters nach Anspruch 1 in Wasch- und Reinigungsmitteln für Textilien, Waschhilfsmitteln, Wäschenachbehandlungsmitteln und Reinigungsmitteln für harze Oberflächen.

4. Verwendung eines Oligoesters nach Anspruch 1 in Vollwaschmitteln, Feinwaschmitteln, Colorwaschmitteln, Wollwaschmitteln,Gardinenwaschmitteln, Baukastenwaschmitteln, die pulver-, granulat-, pasten-, gelförmig oder flüssig sein können, bar soaps, Fleckensalzen, Wäschestärken und -steifen, Bügelhilfen, Wäscheweichspülem, Allzweckreinigem, Handgeschirrspülmitteln, Reinigungs- und Pflegemitteln für Kunststoffe und Lackoberflächen sowie Teppichreinigungs- und Imprägniermitteln.

5. Verwendung eines Oligoesters nach Anspruch 1 in wäßrigen Lösungen oder Zubereitungen zur Erzielung eines Soil Release Finish auf Textilien.

6. Verwendung eines Oligoesters nach Anspruch 1 in flüssiger, pastenförmiger, gelartiger oder granulierter Form.

## Claims

1. An oligoester obtained by polycondensation of
a) from 40 to 52 mol%, preferably from 45 to 50 mol%, of one or more dicarboxylic acids or esters thereof,
b) from 10 to 40 mol%, preferably from 20 to 35 mol%, of ethylene glycol and/or propylene glycol,
c) from 3 to 20 mol%, preferably from 10 to 15 mol%, of polyethylene glycol,
d) from 0.5 to 10 mol%, preferably from 1 to 7.5 mol%, of a water-soluble addition product of from 5 to 80 mol of an alkylene oxide with 1 mol of C₁-C₂₄-alcohols, C₆-C₁₈-alkylphenols or C₈-C₂₄-alkylamines and
e) from 0.4 to 10 mol%, preferably from 0.5 to 8 mol%, of one or more polyols having from 3 to 6 hydroxyl groups.

2. A process for the preparation of the oligoesters of claim 1, which comprises heating components a, b, c, d and e, with the addition of a catalyst, to temperatures of from 160 to 220°C firstly at atmospheric pressure, and then continuing the reaction under reduced pressure at temperatures of from 160 to

3. The use of an oligoester of claim 1 in detergents and cleaning compositions for textiles, detergent auxiliaries, laundry aftertreatment compositions and cleaning compositions for hard surfaces.

4. The use of an oligoester of claim 1 in heavy-duty detergents, light-duty detergents, color detergents, wool detergents, drape detergents, modular detergents, which can be pulverulent, granular, in paste form, in gel form or liquid, bar soaps, stain-removers, laundry starches, and stiffeners, ironing aids, fabric softeners, all-purpose cleaners, manual dishwashing detergents, cleaners and polishes for plastics and painted surfaces, and carpet cleaning and impregnating compositions.

5. The use of an oligoester of claim 1 in aqueous solutions or preparations for obtaining a soil release finish on textiles.

6. The use of an oligoester of claim 1 in liquid, paste, gel or granular form.

## Revendications

1. Oligoester obtenu par polycondensation
a) de 40 à 52, de préférence de 45 à 50 % molaires d'un ou plusieurs acides dicarboxyliques ou leurs esters,
b) de 10 à 40, de préférence de 20 à 35 % molaires d'éthylèneglycol et/ou propylèneglycol,
c) de 3 à 20, de préférence de 10 à 15 % molaires de polyéthylèneglycol,
d) de 0,5 à 10, de préférence de 1 à 7,5 % molaires d'un produit d'addition hydrosoluble de 5 à 80 moles d'un oxyde d'alkylène pour 1 mole d'alcools en C₁-C₂₄, d'alkylphénols en C₆-C₁₈ ou d'alkylamines en C₈-C₂₄ et
e) de 0,4 à 10, de préférence de 0,5 à 8 % molaires d'un ou plusieurs polyols présentant 3 à 6 groupes hydroxyle.

2. Procédé pour la préparation des oligoesters selon la revendication 1, **caractérisé en ce qu'**on chauffe les composants a, b, c, d et e en ajoutant un catalyseur, d'abord à la pression normale à une température de 160 à 200°C, et ensuite on continue la réaction sous vide à une température de 160 à 240°C.

3. Utilisation d'un oligoester selon la revendication 1 dans des produits de lavage et de nettoyage de matières textiles, des adjuvants de lavage, des produits après-lavage et des produits de nettoyage de surfaces dures.

4. Utilisation d'un oligoester selon la revendication 1 dans des détergents tout usage, des lessives pour lavage délicat, pour lavage d'articles colorés, pour lavage de laine, pour lavage de rideaux, pour lavage de boîtes à outils, qui peuvent se présenter sous forme de poudre, de granulé, de pâte, de gel ou liquide, de savon en pain, de sels anti-tache, d'amidons pour linge et d'agents d'amidonnage de linge, de produit de repassage, d'assouplissants, de produits de nettoyage tout usage, de produits de lavage de vaisselle, de produits de nettoyage et de soins pour matières plastiques et surfaces vernies, ainsi que de produits de nettoyage de tapis et de produits d'imprégnation.

5. Utilisation d'un oligoester selon la revendication 1 en solutions ou préparations aqueuses pour l'obtention d'un apprêt anti-souillure sur des textiles.

6. Utilisation d'un oligoester selon la revendication 1 sous forme de liquide, de pâte, de gel ou de granules.
